# EUROPEAN PATENT SPECIFICATION

(11) **EP 2 787 342 B1**
(45) Date of publication and mention of the grant of the patent: **01.11.2017**
(21) Application number: 13165326.3
(22) Date of filing: 25.04.2013
(51) Int. Cl.: G01N 23/207, G01N 23/22, G01N 23/223, G01N 1/28, G01N 1/36

(54) **Preparation of sample-pellets from milk and dairy products by pressing**
Herstellung von Probenpellets von Milch und Milchprodukten durch Pressen
Préparation de granules d'échantillon de lait et de produits laitier par pressage

(30) Priority: 05.04.2013 EP 13162472
(43) Date of publication of application: 08.10.2014
(73) Proprietor: PANalytical B.V., 7600 AA Almelo (NL)
(72) Inventor: Campbell, Ian, 7600 Almelo (NL); Gardolinski, Jose Eduardo Ferreira da Costa, 7600 Almelo (NL)
(74) Representative: Greene, Simon Kenneth

(56) References cited:
- US-A- 4 595 584
- Eva Marguã- ET AL: "X-Ray Fluorescence Analysis, Sample Preparation For" In: "Encyclopedia of Analytical Chemistry", 15 December 2009 (2009-12-15), John Wiley & Sons, Ltd, Chichester, UK, XP055129520, ISBN: 978-0-47-002731-8 DOI: 10.1002/9780470027318.a6806m.pub2, * paragraph [4.1.2.2] * * page 5, left-hand column, last paragraph * * paragraph [5.1.1] * * page 9, right-hand column, last paragraph *
- KATLEEN VAN MEEL ET AL: "Determination of Platinum, Palladium, and Rhodium in Automotive Catalysts Using High-Energy Secondary Target X-ray Fluorescence Spectrometry", ANALYTICAL CHEMISTRY, vol. 79, no. 16, 1 August 2007 (2007-08-01), pages 6383-6389, XP055070237, ISSN: 0003-2700, DOI: 10.1021/ac070815r
- GALINA V. PASHKOVA: "X-ray Fluorescence Determination of Element Contents in Milk and Dairy Products", FOOD ANALYTICAL METHODS, vol. 2, no. 4, 23 December 2009 (2009-12-23), pages 303-310, XP055129454, ISSN: 1936-9751, DOI: 10.1007/s12161-009-9080-5

## Description

### Field of Invention

The invention relates to preparation of samples by pressing, for example for X-ray fluorescence analysis (XRF), including for example the preparation of dairy samples.

### Background Art

Taking measurements of samples frequently includes preparing the sample in some way for measurement. For samples that are not fully homogenous, some form of breaking up and mixing may be necessary to avoid variation across the sample. Further, the sample may need to be formed into a sample shape of the correct shape.

In particular, samples may be pressed into pellets for analysis.

The analysis of biological samples in general is described in the Encyclopedia of Analytical Chemistry, 2009, Sample Preparation For X-Ray Fluorescence Analysis, E. Margui et al. Milk contains mineral elements in different fractions (Rinaldoni et al, "Analytic determinations of mineral content by XRF, ICP and EEA in ultrafiltered milk and yoghurt", Latin American Applied Research, Volume 39, pages 113 to 118, 2009). These components may be considered to be proteins, fat and sugar related phases.

If samples with relatively high fat content (for example greater than 10%) are processed into pellets, then the application of high pressure during a pressing step, for example, larger than 3 to 5 ton/cm² (3 to 5 x10¹² Pa) may cause the fat to extrude from the sample. This makes precise measurement impossible. However, samples with lower fat content may need larger pressures to form stable pellets with sufficient integrity to survive the pellet manufacturing process. These issues are particularly relevant for dairy products which may have fat levels either above or below 10% and hence which may require a range of different pressures based on the composition of the sample.

Similar effects may be observed for samples with other components that may mobilise under pressure. Such components may include oils, moisture, protein, or other biological material. Mobilisation of components within mixed samples can lead to separation of the mobile component or simply inhomogeneity that gives poor or non-repeatable results when carrying out measurements on the sample.

Pressed samples may be used, for example, for X-ray fluorescence measurements.

A prior approach to XRF measurement of dairy samples, containing fat, is provided in Pashkova, "X-ray fluorescence determination of element contents in milk and dairy products", Food Anal. Methods (2009) 2.303-310. This describes preparing milk powder pellets weighing 4g and with 40mm diameter using pressures from 2 to 8 tons with a hydraulic press. Lower pressures were used for samples with high fat content and higher pressures for samples with lower fat content. Additionally it is well documented that dried milk samples with fat content > 10%, when pressed under pressure > 2 tons, will extrude fat..

However, using different processes for different samples leads to difficulties since it is then difficult to directly compare results in the case that different methods are used to obtain the results. Comparing results obtained using different methods can lead to unpredictable results. This is particularly the case for low density samples which are highly compacted during the preparation of the pellets. Different pressures can lead to different results.

There is therefore a need for an improved method of sample preparation which can be applied to samples particular to dairy samples, especially in powder form.

A good degree of homogeneity is required, since inhomogeneity will introduce variations into the X-ray fluorescence results which will deliver poor reproducibility if the samples are not mixed.

### Summary of Invention

According to a first aspect of the invention there is provided a method of preparing samples according to claim 1.

The component that may mobilise may be fat, moisture, protein, oils etc... any phase which is disturbed by pressure and becomes mobile, and the additive may be a binding additive for binding that component. The additive comprises activated carbon, and may further comprise material such as activated alumina.

In a particular embodiment, the additive may in particular be a fat-binding additive for binding fat. A fat binding additive that binds to the fat in the immediate vicinity of its segregation when the sample and binder are pressed is preferred. The fat-binding additive comprises activated carbon, and may further comprise similar acting compounds for example activated alumina.

The aforementioned binder may further comprise a wax, for example a micronized wax. The amount of wax may vary according to the physical requirements of the desired sample pellet.

The step of pressing into a pellet may be carried out at a pressure of over 5 ton/cm². A particular benefit of embodiments of the invention is that the fat-binding additive means that the same process may be carried out for varied amounts of fat.

The step of milling and mixing may be carried out in a mixer-mill. Alternatively, separate milling and mixing steps may be carried out to achieve homogenisation and thorough mixing of the additives.

The amount of binder varies according to sample characteristics and as such can represent a weight fraction of the total weight of the sample and binder, preferably the amount of binder is 6% to 15% by weight of the total weight of the sample and binder.

The sample may be a dry powder dairy sample but also any sample type which may benefit from the additive previously described.

The invention also relates to a method of making XRF measurements including preparing a sample as discussed above.

### Brief Description of Drawings

For a better understanding of the invention, embodiments will now be described, purely by way of example, with reference to the accompanying drawing, in which
Figure 1 is a micrograph illustrating pellets prepared with and without activated carbon; and
Figure 2 is a micrograph illustrating pellets prepared with and without the use of a miller-mixer,
Figure 3 is a photograph of a sample prepared according to a comparative example; and
Figure 4 is a photograph of samples prepared according to embodiments of the invention.

### Detailed Description

Dairy powder samples and other similar samples were used for testing. A sample preparation method was targeted which takes into account the small-scale inhomogeneity of some samples and which was applicable for all fat content, while providing best possible repeatability results.

Although the method is described for use with samples containing fat, the method is also applicable to samples including other similar content which can segregate or otherwise become heterogeneous.

To homogenise the samples in a homogenisation step was carried out using a mill to homogenise, mix and grind the sample. In alternative arrangements, a simple mixer may be used or alternatively a multi-step process may be used for example with separate sample preparation and mixing apparatus.

In order to bind the fat, the method according to the specific embodiment uses an additive for binding fat which may segregate when the sample is pressed to form a pellet. Preferably, when the sample is pressed and the fat segregates, the fat should be bound at its immediate vicinity.

Many additives were tested and it was observed from visual inspections and also XRF measurements that activated carbon provided the best fat-binding characteristics. Activated alumina is an alternative. Other substances tested included boric acid, different grades of cellulose, starch, Hoechst wax, and mixtures of those.

Without wishing to be bound by theory, it is believed that the activated carbon, due to its extremely high surface area, adsorption capacity, chemical and physical binding characteristics, allowed for fatty samples to be pressed into a stable pellet at pressures as high as 10 ton/cm² without significant fat exudation. In particular, good results were obtained with the addition of 5 % activated carbon.

By way of comparison, without using activated carbon, fatty infant formula samples are completely wet from exudating fat when pressed at 5 ton/cm².

In a step to further improve the repeatability of the sample preparation, mixtures of additives were tested and it was observed that the use of activated carbon and wax rendered even better results than the pure activated carbon.

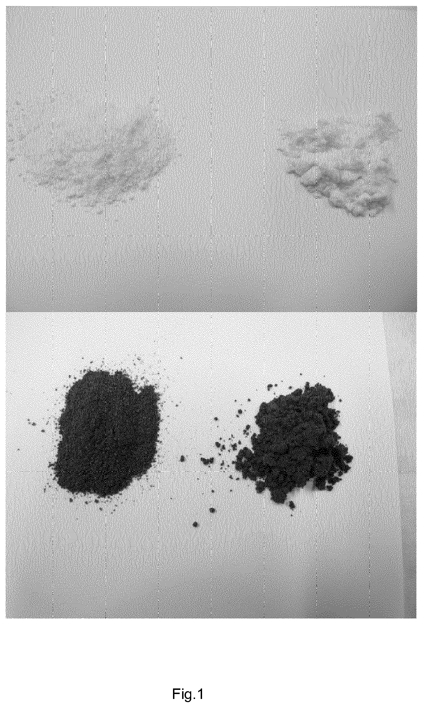

To illustrate this, Figure 1 shows an original milk powder product at top left and a milk powder product after grinding at top right. The image at bottom left illustrates the milk powder product mixed with activated carbon and the image at bottom right illustrates the milk powder product mixed with activated carbon The efficient grinding of a very fatty sample is evident, with a consequent increase in homogeneity.

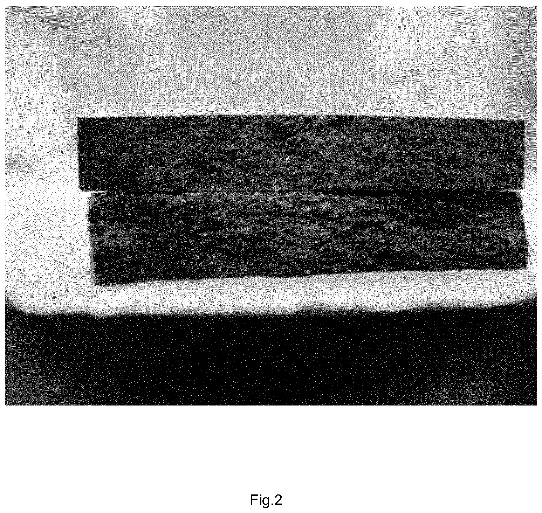

Figure 2 shows a comparison between a section of a pressed pellet of fatty infant formula and activated carbon (5%) pressed at 10 ton/cm² after homogenization, shown above, and a comparison section of a pellet homogenized manually, shown below. Notice the smoother surface of the pellet homogenized as well as its cleaner cleavage and smaller quantity of milk granules (white spots).

The use of pure activated carbon as a fat-binder, although very efficient, proved to be a problem when producing pellets from very low fat products, as those were not mechanically stable. To address this, a mixture of carbon and wax was used as the binder.

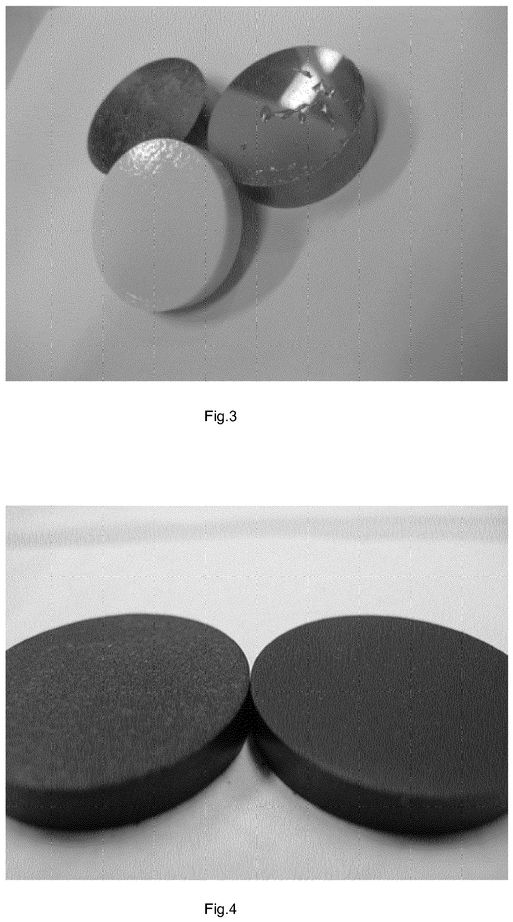

Figures 3 and 4 show results obtained using a sample with 26% fat. Figure 3 shows a comparative example pressed at only 5 tons - a white sample which is simply mixed without additive. The other cylinders in Figure 3 are die components from the press. It is possible to see the fat droplets and sheen caused by separating fat even at these low pressures. Figure 4 shows a pair of samples according to the invention. The left hand sample is simply hand blended and the right sample milled. In both cases, a binder of activated carbon and wax was used as discussed above. Both samples show an avoidance of a fatty sheen. The improvement caused by milling may be seen in the absence of a grain in the right sample.

Pellets were formed as set out above and tested in a Panalytical XRF spectrometer, of type "E3-XL". The amounts of a number of elements was tested, namely Ca, Cl, Cu, Fe, K, Mg, Mn, Na, P, S and Zn. Calibration plots of counts per second against parts per million of the variety of elements was obtained. Good calibration was achieved, in other words the known concentration of the elements was highly correlated with the measured count, bearing in mind the wide variety of samples tested.

The calibrated XRF apparatus was then used to measure a variety of samples of skimmed milk powder and high-fat infant formula milk. All were thoroughly mixed to assure maximum homogeneity.

As a comparison, an alternative sample preparation method according to a comparative example was used. The comparative example used direct pressing of the product at 10 ton/cm² for skimmed milk and 3 ton /cm² for fatty infant formula.

The samples according to the invention were carried out and relative standard deviations were calculated for a range of elements.

Table 1 shows the system repeatability values for ten repeats of a comparative example using skimmed milk powder simply pressed into pellets (top ten lines) and for ten repeats of the same skimmed milk powder using a sample prepared using the recipe as set out above. Note that the system repeatability is the repeatability of the measurement using the same sample.

**TABLE 1**

| | Ca | Cl | Cu | Fe | K | Mg | Mn | Na | P | S | Zn |
|---|---|---|---|---|---|---|---|---|---|---|---|
| | 11715 | 11782 | 1.1 | -4.2 | 21111 | 1703 | 0.1 | 5272 | 11035 | 3136 | 37.7 |
| | 11754 | 11831 | 0.8 | -4.3 | 21180 | 1726 | 0.0 | 5406 | 11069 | 3160 | 37.6 |
| | 11845 | 11846 | 1.0 | -4.0 | 21202 | 1695 | 0.2 | 5224 | 11165 | 3154 | 38.0 |
| | 11800 | 11864 | 1.1 | -3.9 | 21241 | 1795 | 0.2 | 5484 | 11107 | 3169 | 37.8 |
| | 11800 | 11867 | 0.7 | -4.1 | 21224 | 1756 | -0.2 | 5282 | 11238 | 3181 | 38.0 |
| | 11806 | 11831 | 0.5 | -4.1 | 21200 | 1749 | -0.3 | 5486 | 11100 | 3159 | 38.1 |
| | 11832 | 11834 | 0.7 | -4.6 | 21227 | 1758 | 0.1 | 5416 | 11068 | 3164 | 37.7 |
| | 11765 | 11848 | 1.1 | -4.4 | 21209 | 1690 | 0.0 | 5366 | 11119 | 3154 | 37.5 |
| | 11796 | 11858 | 1.4 | -4.3 | 21246 | 1703 | -0.1 | 5402 | 11166 | 3155 | 38.0 |
| | 11798 | 11857 | 1.2 | -4.6 | 21267 | 1736 | 0.4 | 5237 | 11127 | 3170 | 37.8 |
| Ave | 11791 | 11842 | 1.0 | -4.3 | 21211 | 1731 | 0.0 | 5358 | 11119 | 3160 | 37.8 |
| SD (ppm) | 37.83 | 24.83 | 0.28 | 0.24 | 43.27 | 33.94 | 0.21 | 97.58 | 58.89 | 12.07 | 0.20 |
| rel SD % | 0.32 | 0.21 | 28.72 | - 5.57 | 0.20 | 1.96 | 516.40 | 1.82 | 0.53 | 0.38 | 0.53 |
| | | | | | | | | | | | |
| | 11053 | 10811 | 0.9 | 1.9 | 19067 | 1460 | 1.3 | 4645 | 9984 | 2883 | 35.8 |
| | 11024 | 10885 | 0.9 | 1.8 | 19184 | 1526 | 0.5 | 4737 | 9973 | 2898 | 35.8 |
| | 11089 | 10899 | 1.1 | 1.8 | 19314 | 1435 | -0.1 | 4701 | 10121 | 2909 | 36.0 |
| | 11095 | 10932 | 0.8 | 1.8 | 19281 | 1507 | 0.6 | 4860 | 10060 | 2889 | 36.1 |
| | 11057 | 10904 | 1.0 | 1.5 | 19156 | 1507 | 0.5 | 4800 | 9983 | 2902 | 36.1 |
| | 11077 | 10914 | 1.4 | 1.2 | 19251 | 1473 | 0.6 | 4768 | 10016 | 2907 | 36.2 |
| | 11101 | 10916 | 0.8 | 1.5 | 19222 | 1444 | 0.7 | 4765 | 10163 | 2908 | 36.2 |
| | 11088 | 10903 | 1.0 | 1.5 | 19138 | 1470 | 1.2 | 4619 | 9951 | 2899 | 35.7 |
| | 11022 | 10909 | 0.8 | 1.5 | 19156 | 1472 | 0.5 | 4896 | 9994 | 2905 | 35.7 |
| | 11036 | 10914 | 0.6 | 1.9 | 19168 | 1534 | 0.9 | 4678 | 10008 | 2901 | 36.2 |
| Ave | 11064 | 10899 | 0.9 | 1.6 | 19194 | 1483 | 0.7 | 4747 | 10025 | 2900 | 36.0 |
| SD (ppm) | 29.85 | 33.18 | 0.22 | 0.23 | 73.73 | 33.90 | 0.40 | 89.63 | 68.67 | 8.43 | 0.21 |
| rel SD % | 0.27 | 0.30 | 23.26 | 14.14 | 0.38 | 2.29 | 59.31 | 1.89 | 0.68 | 0.29 | 0.58 |

Table 2 shows the method repeatability values for ten repeats of a comparative example using skimmed milk powder simply pressed into pellets (top ten lines) and for ten repeats of the same skimmed milk powder using the invention. Note that method repeatability repeats the whole experiment using the same two procedures.

Table 3 shows the method repeatability values for ten repeats of a comparative example using high fat infant formula sample (26% fat) simply pressed into pellets (top ten lines) and for ten repeats of an example using the invention. Note that method repeatability repeats the whole experiment using the same two procedures.

In brief, comparison of the relative standard deviation, expressed in %, in tables 2 and 3 shows better results for the lower half of the table (the method of the invention) compared with the upper half (the comparative example). This is particularly the case for table 3, the high fat sample, which shows that the method according to the invention is successful at dealing with such samples.

Good repeatability of measurement was obtained for Ca, Cl, K, Mg, Na, P, S and Zn.

For the low fat sample (skimmed milk) illustrated in table 2, relatively poor results were obtained for Cu, though better using the invention than the comparative example, in view of the fact that the concentration of Cu was very low, near to the method detection limit.

Results for Fe and Mn were also poor in table 2, being also below detection limits. In the case of Mn, note for example the negative numbers obtained in table 2 for the comparative examples. -No usable results for Fe were obtained using the comparative example of table 2. However, Fe did give repeatable results using the recipe according to the invention in table 2.

As for table 3, it is notable that reasonable values of Fe and Cu were obtained in this case, i.e. for the high fat sample. The use of the recipe according to the invention, in the lower half of the table, increased repeatability, for example for Ca and Cl the repeatability improved by factors of 8.2 and 6.3 respectively.

**TABLE 2**

| | Ca | Cl | Cu | Fe | K | Mg | Mn | Na | P | S | Zn |
|---|---|---|---|---|---|---|---|---|---|---|---|
| | 11588 | 12155 | 0.7 | -3.9 | 19083 | 1456 | -1.4 | 4964 | 10713 | 3110 | 37.6 |
| | 11657 | 11752 | 1.5 | -4.3 | 20978 | 1720 | -0.3 | 5374 | 11044 | 3143 | 37.9 |
| | 11615 | 12175 | 0.7 | -4.1 | 19026 | 1353 | -1.2 | 4503 | 10900 | 3122 | 37.1 |
| | 11676 | 12200 | 0.6 | -4.3 | 19026 | 1389 | -1.0 | 4623 | 10947 | 3135 | 37.3 |
| | 11703 | 12113 | 1.1 | -4.2 | 19104 | 1369 | -1.8 | 4569 | 10783 | 3104 | 38.2 |
| | 11651 | 12004 | 1.2 | -3.4 | 19116 | 1410 | -1.4 | 4973 | 10698 | 3075 | 37.7 |
| | 11531 | 12219 | 1.2 | -4.2 | 19091 | 1416 | -1.5 | 5142 | 10957 | 3122 | 37.8 |
| | 11611 | 12188 | 0.7 | -3.5 | 19051 | 1411 | -0.9 | 4724 | 10920 | 3125 | 36.9 |
| | 11592 | 12189 | 1.2 | -4.1 | 19119 | 1376 | -1.6 | 4896 | 10844 | 3124 | 37.5 |
| | 11715 | 11782 | 1.1 | -4.2 | 21111 | 1703 | 0.1 | 5272 | 11035 | 3136 | 37.7 |
| Ave | 11634 | 12078 | 1.0 | -4.0 | 19471 | 1460 | -1.1 | 4904 | 10884 | 3120 | 37.6 |
| SD ppm | 57.04 | 174.84 | 0.30 | 0.32 | 830.84 | 135.54 | 0.60 | 299.22 | 122.42 | 19.55 | 0.39 |
| rel SD% | 0.49 | 1.45 | 30.18 | -8.02 | 4.27 | 9.28 | -54.38 | 6.10 | 1.12 | 0.63 | 1.03 |
| | | | | | | | | | | | |
| | 10823 | 11188 | 1.1 | 4.1 | 17310 | 1275 | -0.7 | 4189 | 9814 | 2863 | 35.8 |
| | 10929 | 11187 | 1.3 | 5.6 | 17362 | 1269 | -1.2 | 4196 | 9832 | 2869 | 36.0 |
| | 10965 | 11120 | 1.1 | 3.2 | 17362 | 1221 | 0.7 | 4249 | 9848 | 2849 | 35.3 |
| | 10864 | 11222 | 0.9 | 2.8 | 17404 | 1275 | 0.1 | 4262 | 9837 | 2872 | 35.1 |
| | 10884 | 11176 | 0.8 | 4.5 | 17308 | 1264 | -1.0 | 4185 | 9893 | 2860 | 35.1 |
| | 10738 | 11265 | 1.0 | 6.9 | 17294 | 1250 | -0.6 | 4317 | 10034 | 2876 | 34.6 |
| | 10886 | 11186 | 0.6 | 3.7 | 17297 | 1252 | -0.2 | 4180 | 9903 | 2867 | 35.9 |
| | 10949 | 11166 | 1.0 | 3.6 | 17273 | 1213 | -0.2 | 4104 | 9890 | 2855 | 35.4 |
| | 10697 | 11325 | 1.0 | 3.5 | 17286 | 1284 | -0.7 | 4268 | 9986 | 2898 | 35.3 |
| | 11053 | 10811 | 0.9 | 1.9 | 19067 | 1460 | 1.3 | 4645 | 9984 | 2883 | 35.8 |
| Ave | 10879 | 11165 | 1.0 | 4.0 | 17496 | 1276 | -0.3 | 4260 | 9902 | 2869 | 35.4 |
| SD ppm | 106.2 | 136.53 | 0.19 | 1.42 | 553.43 | 68.61 | 0.78 | 148.01 | 75.44 | 14.19 | 0.44 |
| rel SD % | 0. 98 | 1.22 | 19.47 | 35.75 | 3.16 | 5.38 | - 310.6 | 3.47 | 0.76 | 0.49 | 1.25 |

**TABLE 3**

| | Ca | Cl | Cu | Fe | K | Mg | Mn | Na | P | S | Zn |
|---|---|---|---|---|---|---|---|---|---|---|---|
| | 4357 | 4146 | 2.7 | 43.0 | 5596 | 383 | -1.2 | 1710 | 2334 | 1431 | 46.5 |
| | 4571 | 4335 | 3.3 | 30.7 | 5789 | 419 | -1.3 | 1838 | 2419 | 1412 | 45.0 |
| | 4432 | 4252 | 3.5 | 36.5 | 5707 | 418 | -1.0 | 1883 | 2360 | 1416 | 48.5 |
| | 4389 | 4177 | 3.9 | 34.2 | 5631 | 395 | -0.8 | 1681 | 2326 | 1366 | 41.5 |
| | 4382 | 4198 | 3.5 | 38.2 | 5628 | 389 | -1.1 | 1682 | 2388 | 1381 | 45.7 |
| | 4524 | 4338 | 3.9 | 39.6 | 5793 | 429 | -1.4 | 1781 | 2423 | 1448 | 51.1 |
| | 4544 | 4357 | 2.7 | 35.7 | 5819 | 399 | -0.6 | 1762 | 2485 | 1413 | 47.5 |
| | 4359 | 4150 | 3.5 | 38.6 | 5579 | 392 | -0.6 | 1665 | 2318 | 1371 | 48.8 |
| | 4330 | 4050 | 3.0 | 39.3 | 5515 | 381 | -0.6 | 1743 | 2289 | 1350 | 47.6 |
| | 4720 | 4461 | 3.1 | 38.0 | 5940 | 412 | -0.7 | 1838 | 2500 | 1480 | 44.0 |
| Ave | 4461 | 4246 | 3.3 | 37.4 | 5700 | 402 | -0.9 | 1758 | 2384 | 1407 | 46.6 |
| SD ppm | 125.03 | 124.57 | 0.43 | 3.35 | 132.50 | 16.67 | 0.31 | 75.90 | 71.68 | 40.32 | 2.72 |
| rel SD% | 2.80 | 2.93 | 13.09 | 8.97 | 2.32 | 4.15 | - 33.26 | 4.32 | 3.01 | 2.87 | 5.84 |
| | | | | | | | | | | | |
| | 3890 | 4156 | 2.9 | 36.8 | 5257 | 389 | -0.2 | 1822 | 2304 | 1325 | 41.2 |
| | 3893 | 4154 | 3.1 | 37.9 | 5237 | 396 | 0.4 | 1920 | 2304 | 1347 | 40.8 |
| | 3899 | 4136 | 3.4 | 39.9 | 5255 | 406 | -0.1 | 1754 | 2303 | 1341 | 37.8 |
| | 3893 | 4163 | 3.1 | 38.3 | 5219 | 382 | -1.0 | 1790 | 2373 | 1344 | 42.5 |
| | 3906 | 4143 | 2.4 | 35.8 | 5244 | 385 | -0.2 | 1702 | 2322 | 1324 | 39.8 |
| | 3911 | 4178 | 3.4 | 44.5 | 5187 | 406 | 0.0 | 1937 | 2399 | 1375 | 41.9 |
| | 3896 | 4194 | 3.1 | 36.6 | 5284 | 430 | -0.5 | 1825 | 2327 | 1326 | 38.5 |
| | 3865 | 4163 | 3.4 | 39.4 | 5254 | 408 | -0.6 | 1873 | 2318 | 1342 | 38.5 |
| | 3877 | 4171 | 3.6 | 38.6 | 5231 | 422 | 0.2 | 1788 | 2326 | 1347 | 39.1 |
| | 3888 | 4131 | 3.0 | 39.6 | 5185 | 411 | -0.1 | 1753 | 2355 | 1331 | 39.9 |
| Ave | 3892 | 4159 | 3.1 | 38.7 | 5235 | 404 | -0.2 | 1816 | 2333 | 1340 | 40.0 |
| S D ppm | 13.32 | 19.34 | 0.34 | 2.44 | 31.28 | 15.65 | 0.40 | 75.34 | 32.41 | 15.28 | 1.57 |
| rel SD% | 0.34 | 0.46 | 10.85 | 6.30 | 0.60 | 3.88 | -192.38 | 4.15 | 1.39 | 1.14 | 3.92 |

It thus appears that the use of the fat-binder avoids fat transport during pressing and that the homogeneity of the samples is improved by the mixing process used. The method of preparing samples accordingly improves the measurement of various element in samples containing variable amounts of fat, for example milk powder of different fat concentrations. The same method may accordingly be used for milk powder of widely varying fat concentration, improving repeatability, reliability and the comparison accuracy.

Those skilled in the art will appreciate that variations and additions may be made to the invention.

The embodiments presented above all use activated carbon. However, the inventors have also achieved positive results with finely powdered graphite

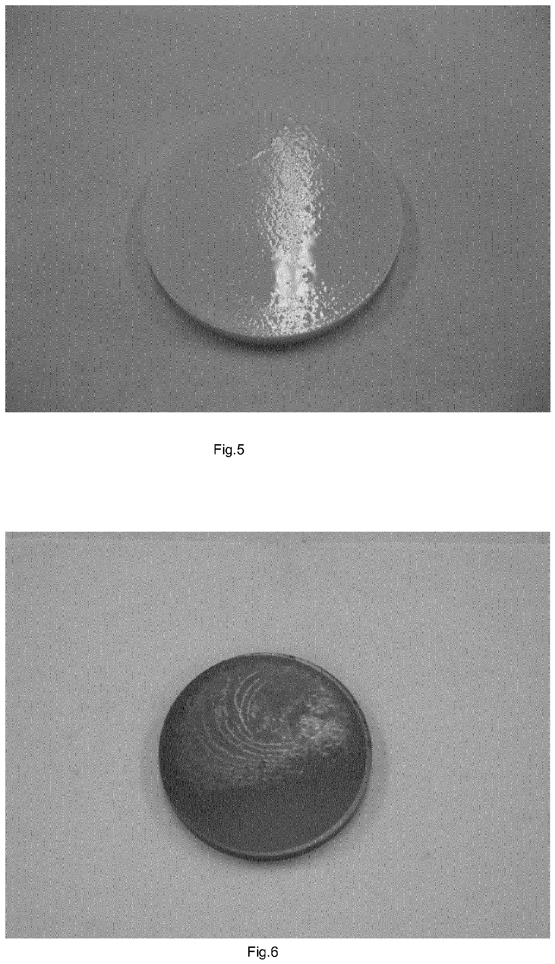

Figure 5 is a photograph of a pressed pellet of a dairy sample containing 16% fat. The sample is extremely wet as a result of fat exudation.

Figure 6 is a photograph of a pressed pellet of the same dairy sample as in Figure 5 but pressed with a mixture of powdered graphite and wax. The photograph shows minimal fat exudation. Thus, the data presented demonstrates that powdered graphite can be used instead of activated carbon. Further, the pressed pellet of Figure 6 gave more reproducible results in XRF than the pressed pellet of Figure 5 without the graphite and wax additive.

We further attach data prepared with five samples of the pressed dairy pellet containing 16% fat. Table 4 relates to five samples simply pressed into a pellet (upper half of table) and five samples mixed with wax and graphite powder and pressed into a pellet (lower half of table).

**TABLE 4**

| | Ca | Cl | Cu | Fe | K | Mg | Mn | Na | P | S | Zn |
|---|---|---|---|---|---|---|---|---|---|---|---|
| | 9461 | 2699 | 6 | 106.8 | 5345 | 385 | - | 1384 | 5244 | 1173 | 79.5 |
| | 9200 | 2485 | 4.8 | 102.9 | 5160 | 261 | - | 1362 | 4544 | 1059 | 81.1 |
| | 9103 | 2413 | 5.6 | 96.9 | 5023 | 277 | - | 1338 | 4812 | 1063 | 81.1 |
| | 9184 | 2446 | 5.3 | 101.3 | 5073 | 187 | - | 1232 | 4586 | 1066 | 81.2 |
| | 9071 | 2331 | 4.9 | 111.9 | 4919 | 359 | - | 1399 | 4671 | 1062 | 80.8 |
| Ave | 9204 | 2475 | 5.3 | 104.0 | 5104 | 294 | - | 1343 | 4771 | 1085 | 80.7 |
| SD ppm | **154** | **138** | **0.5** | **5.7** | **160** | **80** | **-** | **66** | **283** | **49** | **0.7** |
| rel SD% | 1.7 | 5.6 | 9.3 | 5.5 | 3.1 | 27.1 | - | 4.9 | 5.9 | 4.6 | 0.9 |
| | 8976 | 2794 | 4.9 | 91.9 | 4951 | 805 | - | 2386 | 5733 | 1247 | 72.7 |
| | 8889 | 2810 | 4.6 | 89 | 4952 | 872 | - | 2471 | 5737 | 1244 | 74 |
| | 8859 | 2797 | 5.1 | 94.4 | 4951 | 821 | - | 2420 | 5692 | 1237 | 75.5 |
| | 8952 | 2803 | 5.1 | 93.2 | 4972 | 844 | - | 2407 | 5696 | 1247 | 73 |
| | 8930 | 2749 | 4.6 | 95.3 | 4919 | 783 | - | 2313 | 5564 | 1222 | 75.4 |
| Ave | 8921 | 2791 | 4.86 | 93 | 4949 | 825 | - | 2399 | 5684 | 1239 | 74.1 |
| SD ppm | **47** | **24** | **0.3** | **2.5** | **19** | **34** | **-** | **58** | **70** | **11** | **1.3** |
| rel SD % | 0.5 | 0.9 | 5.2 | 2.7 | 0.4 | 4.2 | - | 2.4 | 1.2 | 0.9 | 1.8 |
| SD Improvement ratio | 3.2 | 5.7 | 2.0 | 2.3 | 8.4 | 2.3 | - | 1.1 | 4.0 | 4.7 | 0.5 |

The entry "-" relates to a non-measureable value.

Note the increase in reproducibility (lower standard deviation values) for all elements (except Zn) by the use of homogenization with the stabilizing binder, in this case, composed of wax and graphite. This is represented by the ratio of the standard deviation improvement using the method presented in the final row of Table 4. Numbers above 1 represent an improvement using the embodiment of the invention.

A marked improvement using the stabilizing binder of wax and graphite is clearly seen for all elements except Mn which is below the method detection limit and Zn.

Note that instead of activated carbon or graphite a mixture of both, i.e. graphite and activated carbon may be used.

To further improve the measurement accuracy various techniques may be used, for example by increasing measurement times. Fine tuning of the apparatus and the calibration may also be used, for example by including additional secondary standards based on additional milk powder samples.

As well as being relevant for binding fat, other materials may also be bound such as moisture, protein or oils.

## Claims

1. A method of preparing a sample from a milk or dairy product, the method comprising:
adding a binder to the sample, the binder including a binding additive for binding the content;
homogenizing the sample; and
pressing the homogenised sample, the binder, and the binding additive into a pellet; and wherein the binding additive comprises activated carbon.

2. A method according to any of claim 1 wherein the binding additive further comprises graphite.

3. A method according to any preceding claim wherein the binder further comprises a wax.

4. A method according to claim 3, wherein the wax is a micronised wax.

5. A method according to claim 3 or 4 wherein the amount of wax is 30% to 65%.

6. A method according to any preceding claim wherein the step of pressing into a pellet is carried out at a pressures greater than 2 ton/cm².

7. A method according to any preceding claim, wherein the step of homogenising is carried out in a mill.

8. A method according to any preceding claim, wherein the amount of binder is 2% to 20% by weight of the total weight of the sample and binder.

9. A method according to claim 8 wherein the amount of binder is 6% to 15% by weight of the total weight of the sample and binder.

10. A method of carrying out X-ray fluorescence, comprising:
preparing a sample containing fat by a method according to any of claims 1 to 8;
introducing the pellet into X-ray fluorescence apparatus; and
obtaining an X-ray spectrum of the pellet.

11. A method according to claim 10, wherein the sample is a dry powder dairy sample.

## Patentansprüche

1. Verfahren zur Herstellung einer Probe aus einem Milch- oder Molkereiprodukt,
wobei das Verfahren Folgendes umfasst:
Hinzufügen eines Bindemittels zu der Probe, wobei das Bindemittel einen bindenden Zusatzstoff zum Binden des Inhalts beinhaltet;
Homogenisieren der Probe; und
Pressen der homogenisierten Probe, des Bindemittels und des bindenden Zusatzstoffes zu einem Pellet; und
wobei der bindende Zusatzstoff aktivierten Kohlenstoff umfasst.

2. Verfahren nach einem von Anspruch 1, wobei der bindende Zusatzstoff, ferner Graphit umfasst.

3. Verfahren nach einem vorhergehenden Anspruch, wobei das Bindemittel ferner ein Wachs umfasst.

4. Verfahren nach Anspruch 3, wobei das Wachs ein mikronisiertes Wachs ist.

5. Verfahren nach Anspruch 3 oder 4, wobei die Menge an Wachs 30 % bis 65 % beträgt.

6. Verfahren nach einem vorhergehenden Anspruch, wobei der Schritt des Pressens zu einem Pellet bei Druck von mehr als 2 Tonnen/cm² durchgeführt wird.

7. Verfahren nach einem vorhergehenden Anspruch, wobei der Schritt des Homogenisierens in einer Mühle durchgeführt wird.

8. Verfahren nach einem vorhergehenden Anspruch, wobei die Menge an Bindemittel 2 Gew.-% bis 20 Gew.-% des Gesamtgewichts der Probe und des Bindemittels beträgt.

9. Verfahren nach Anspruch 8, wobei die Menge an Bindemittel 6 Gew.-% bis 15 Gew.-% des Gesamtgewichts der Probe und des Bindemittels beträgt.

10. Verfahren zur Durchführung von Röntgenfluoreszenz, umfassend:
Herstellen einer fetthaltigen Probe durch ein Verfahren nach einem der Ansprüche 1 bis 8;
Einführen des Pellets in eine Röntgenfluoreszenzvorrichtung; und
Erhalten eines Röntgenspektrums des Pellets.

11. Verfahren nach Anspruch 10, wobei die Probe eine Trockenpulvermolkereiprobe ist.

## Revendications

1. Procédé de préparation d'un échantillon à partir de lait ou d'un produit laitier,
ledit procédé comprenant :
l'ajout d'un liant à l'échantillon, le liant comprenant un additif de liaison permettant de lier le contenu ;
l'homogénéisation de l'échantillon ; et
la compression de l'échantillon homogénéisé, du liant et de l'additif de liaison en un granule ; et
ledit additif de liaison comprenant du charbon actif.

2. Procédé selon la revendication 1, ledit additif de liaison comprenant en outre du graphite.

3. Procédé selon l'une quelconque des revendications précédentes, ledit liant comprenant en outre une cire.

4. Procédé selon la revendication 3, ladite cire étant une cire micronisée.

5. Procédé selon la revendication 3 ou 4, ladite quantité de cire étant de 30 % à 65 %.

6. Procédé selon l'une quelconque des revendications précédentes, ladite étape de compression en un granulé étant effectuée à une pression supérieure à 2 tonnes/cm².

7. Procédé selon l'une quelconque des revendications précédentes, ladite étape d'homogénéisation étant effectuée dans un moulin.

8. Procédé selon l'une quelconque des revendications précédentes, ladite quantité de liant étant de 2 % en poids à 20 % en poids du poids total de l'échantillon et du liant.

9. Procédé selon la revendication 8, ladite quantité de liant étant de 6 % en poids à 15 % en poids du poids total de l'échantillon et du liant.

10. Procédé de réalisation de la spectrométrie à fluorescence X comprenant :
la préparation d'un échantillon contenant de la matière grasse par un procédé selon l'une quelconque des revendications 1 à 8 ;
l'introduction du granulé dans le spectromètre de fluorescence X ; et
l'obtention d'un spectre de rayons x du granulé.

11. Procédé selon la revendication 10, ledit échantillon étant un échantillon de laitage en poudre sèche.
